# EUROPEAN PATENT APPLICATION

(11) **EP 3 553 609 A1**
(43) Date of publication of application: **16.10.2019**
(21) Application number: 19166503.3
(22) Date of filing: 01.04.2019
(51) Int. Cl.: G05B 19/042

(54) **A CONTROL CIRCUIT AND CONTROL METHOD FOR JUICER AUTOMATIC CLEANING AND A JUICER**

(30) Priority: 09.04.2018 CN 201810310019
(71) Applicant: Zhejiang Shaoxing Supor Domestic Electrical Appliance Co., Ltd., Shaoxing, Zhejiang 312017 (CN)
(72) Inventor: WANG, Huijiang, Shaoxing, Zhejiang 312017 (CN); DAI, Song, Shaoxing, Zhejiang 312017 (CN); TANG, Yezhou, Shaoxing, Zhejiang 312017 (CN); HU, Yanxiang, Shaoxing, Zhejiang 312017 (CN)
(74) Representative: LLR

(57) **Abstract**

The invention provides a control circuit (500) and control method for juicer automatic cleaning and a juicer. The control circuit (500) comprises: a first switch circuit (1), of which an input terminal is connected with an external power source (10); a second switch circuit (2), of which an input terminal is connected with an output terminal of the first switch circuit (1), and an output terminal of the second switch circuit (2) is connected with an electric motor (400), the electric motor (400) being connected in a driving manner with a stirring assembly (300) of the juicer; and, a controller (3), of which an output terminal is connected with a control terminal of the first switch circuit (1) and a control terminal of a second switch circuit (2); the controller (3) is configured to, after having received an automatic cleaning trigger signal, control the first switch circuit (1) to be in an on state so as to connect an external power source (10) to the electric motor (400) via the first switch circuit (1) and the second switch circuit (2), such that the electric motor (400) turns. The juicer of the invention, after triggered by an automatic cleaning trigger signal, automatically drives the electric motor (400) to turn, achieving automatic cleaning of the juicer, without the need for manual removal and cleaning by a user, facilitating the cleaning of the juicer.

## Description

The invention relates to the domain of juicer control, and in particular, a control circuit and method for juicer automatic cleaning, and a juicer.

Residues on the inner wall of the jug of a juicer need to be cleaned after juicing so as to keep the inner wall of the jug clean. With existing juicers, a user will manually remove the jug from the main unit of a juicer after juicing, and then manually clean the inner wall of the jug, which is relatively inconvenient.

The invention provides a control circuit and control method for juicer automatic cleaning and a juicer.

Specifically, the invention is realized by the following technical solutions:
According to a first aspect of the invention, there is provided a control circuit for juicer automatic cleaning comprising:
A first switch circuit, of which an input terminal is connected with an external power source;
A second switch circuit, of which an input terminal is connected with an output terminal of the first switch circuit, and an output terminal of the second switch circuit is connected with an electric motor, the electric motor being connected in a driving manner with a stirring assembly of the juicer; and
A controller, of which an output terminal is connected with a control terminal of the first switch circuit and a control terminal of a second switch circuit;
Wherein, the controller is configured to, after having received an automatic cleaning trigger signal, control the first switch circuit to be in an on state so as to connect an external power source to the electric motor via the first switch circuit and the second switch circuit, such that the electric motor turns.

Optionally, the controller is further configured to, after having received the automatic cleaning trigger signal, control the second switch circuit to switch between an on state and an off state, so as to control the electric motor to switch between turning forward and turning inversely;

Wherein, when the second switch circuit is in an on state, the positive pole of the external power source is connected with a first terminal of the electric motor, and the negative pole is connected with a second terminal of the electric motor, so as to drive the electric motor to turn forward; when the second switch circuit is in an off state, the positive pole of the external power source is connected with the second terminal of the electric motor, and the negative pole is connected with the first terminal of the electric motor, so as to drive the electric motor to turn inversely.

Optionally, the controller is further configured to, when it is determined that the time duration during which the electric motor turns forward or inversely is longer than a preset time duration, control the first switch circuit to be in an off state, so as to disconnect the electric motor from the external power source; and, before controlling the second switch circuit to be in an on state or controlling the second switch circuit to be in an off state, control the first switch circuit to be in an on state.

Optionally, the controller, when it is determined that the number of times the second switch circuit switches between an on state and an off state is larger than a preset number of times, controls the first switch circuit to be in an off state.

Optionally, the control circuit further comprises:
A control part provided on a control panel of the juicer and electrically connected with the controller;
Wherein, the automatic cleaning trigger signal is generated by the control part when the control part is triggered.

Optionally, the first switch circuit comprises a first triode and a thyristor;
Wherein, the emitter of the first triode is connected with a first voltage source, the collector of the first triode is connected with the gate of the thyristor, and the base of the first triode is the control terminal of the first switch circuit and is connected with the first voltage source;
Wherein, a first main electrode of the thyristor is connected with the negative pole of the external power source and is grounded, and a second main electrode of the thyristor is the output terminal of the first switch circuit.

Optionally, the control circuit further comprises:
A bridge rectifier circuit, a first input terminal of the bridge rectifier circuit being connected with the positive pole of the external power source, and a second input terminal being connected with the second main electrode of the thyristor;
Wherein, when the second switch circuit is in an off state, the positive pole of the bridge rectifier circuit is connected with a first terminal of the electric motor, and the negative pole of the bridge rectifier circuit is connected with a second terminal of the electric motor;
Wherein, when the second switch circuit is in an on state, the positive pole of the bridge rectifier circuit is connected with the second terminal of the electric motor, and the negative pole of the bridge rectifier circuit is connected with the first terminal of the electric motor.

Optionally, the second switch circuit comprises a second triode, a third triode, a first relay, and a second relay.

Wherein, the base of the second triode and the base of the third triode are both control terminals of the second switch circuit;
Wherein, the emitter of the second triode is grounded, the collector is connected with a first control terminal of the first relay, and a second control terminal of the first relay is connected with a second voltage source;
Wherein, the emitter of the third triode is grounded, the collector is connected with a third control terminal of the second relay, and a fourth control terminal of the second relay is connected with a second voltage source;
Wherein, a fixed contact of the first relay is connected with the first terminal of the electric motor, and two mobile contacts of the second relay are connected respectively with the positive pole and negative pole of the bridge rectifier circuit;
Wherein, a fixed contact of the second relay is connected with the first terminal of the electric motor, and two mobile contacts of the second relay are connected respectively with the positive pole and negative pole of the bridge rectifier circuit.

Optionally, the control circuit further comprises:
A micro switch configured to detect whether a jug lid of the juicer is closed or not, the micro switch being electrically connected with the controller;
Wherein, when the jug lid is closed, the micro switch is in an on state;
Wherein, the controller, after having received an automatic cleaning trigger signal and determined that the micro switch is in an on state, controls the first switch circuit to be in an on state.

According to a second aspect of the invention, there is provided a juicer comprising:
A main unit;
A jug placed on the main unit;
A stirring assembly, being at least partially received inside the jug;
An electric motor provided on the main unit and configured to drive the stirring assembly; and
A control circuit for juicer automatic cleaning according to any one of the above, the control circuit being provided on the main unit and electrically connected with the electric motor.

According to a third aspect of the invention, there is provided a control method for juicer automatic cleaning comprising:
Receiving an automatic cleaning trigger signal;
Controlling an electric motor to turn, so as to automatically clean a jug, wherein, the electric motor is configured to drive a stirring assembly.

Optionally, the controlling an electric motor to turn comprises:
Controlling the electric motor to switch between turning forward and turning inversely.

Optionally, the juicer comprises a first switch circuit and a second switch circuit;
Wherein, the controlling the electric motor to switch between turning forward and turning inversely comprises:
- Controlling the first switch circuit to be in an on state, so as to connect the external power source to the electric motor via the first switch circuit and the second switch circuit;
- Controlling the second switch circuit to switch between an on state and an off state, so as to switch the electric motor between turning forward and turning inversely.

Optionally, a step of controlling the electric motor to switch from turning forward to turning inversely comprises, sequentially:
Controlling the first switch circuit to be in an off state, so as to disconnect the electric motor from the external power source;
Controlling the second switch circuit to be in an off state;
Controlling the first switch circuit to be in an on state.

Optionally, the step of controlling the first switch circuit to be in an on state is executed after the step of controlling the second switch circuit to be in an off state for a first preset time duration.

Optionally, the step of controlling the second switch circuit to be in an off state is executed after the step of controlling the first switch circuit to be in an off state for a second preset time duration.

Optionally, a step of controlling the electric motor to switch from turning inversely to turning forward comprises, sequentially:
Controlling the first switch circuit to be in an off state, so as to disconnect the electric motor from the external power source;
Controlling the second switch circuit to be in an on state;
Controlling the first switch circuit to be in an on state.

Optionally, the step of controlling the first switch circuit to be in connected state is executed after the step of controlling the second switch circuit to be in an on state for a third preset time duration.

Optionally, the step of controlling the second switch circuit to be in an on state is executed after the step of controlling the first switch circuit to be in an off state for a fourth preset time duration.

Optionally, the controlling the electric motor to switch between turning forward and turning inversely comprises:
When it is determined that the time duration during which the electric motor turns forward is longer than a fifth preset time duration, controlling the second switch circuit to switch from an on state to an off state;
When it is determined that the time duration during which the electric motor turns inversely is longer than a sixth preset time duration, controlling the second switch circuit to switch from an off state to an on state.

Optionally, after the controlling the electric motor to switch between turning forward and turning inversely, the control method further comprises:
When it is determined that the number of times the second switch circuit switches between an on state and an off state is larger than a preset number of times, controlling the first switch circuit to be in an off state.

Optionally, before the controlling the electric motor to turn, the control method further comprises:
Detecting whether a jug lid of the juicer is closed by means of a micro switch;
Determining that the jug lid is closed.

It can be seen from the technical solution provided by embodiments of the invention that the juicer of the invention, after triggered by an automatic cleaning trigger signal, automatically drives the electric motor to turn, achieving automatic cleaning of the juicer, without the need for manual removal and cleaning by a user, facilitating the cleaning of the juicer.

It should be understood that the general description above and the following description of details are merely by way of examples and illustrative, and cannot limit the invention.

To describe more clearly the technical solution in embodiments of the invention, the accompanying figures to be used in describing embodiments are described briefly below. Obviously, the accompanying figures described below are merely some embodiments of the invention. For those skilled in the art, other drawings can be obtained according to those accompanying figures without paying creative labor.
Figure 1 is a schematic structure diagram of a control circuit for juicer automatic cleaning according to an exemplary embodiment of the invention.
Figure 2 is a schematic structure diagram of a control circuit for juicer automatic cleaning according to another exemplary embodiment of the invention.
Figure 3 is a schematic structure diagram of a control circuit for juicer automatic cleaning according to yet another exemplary embodiment of the invention.
Figure 4 is a circuit diagram of a control circuit for juicer automatic cleaning shown by an exemplary embodiment of the invention.
Figure 5 is a schematic structure diagram of a control circuit for juicer automatic cleaning according to yet another exemplary embodiment of the invention.
Figure 6 is an operating flow chart of a control circuit for juicer automatic cleaning according to an exemplary embodiment of the invention.
Figure 7 is a perspective view of a juicer according to an exemplary embodiment of the invention.
Figure 8 is a flow chart of a control method for juicer automatic cleaning according to an exemplary embodiment of the invention.

### Terminology:

100 : main unit ; 110 : control panel ; 200 : jug ; 210 : juice output part ; 300 : stirring assembly ; 400 : electric motor ; 410 : first terminal ; 420 : second terminal ; 500 : control circuit ; 1 : first switch circuit ; Q1 : first triode ; SCR1 : thyristor ; R1 : first resistor; R2 : second resistor ; R3 : third resistor ; R4 : fourth resistor ; 2 : second switch circuit ; Q2 : second triode ; Q3 : third triode ; K1 : first relay ; K2 : second relay ; R5 : fifth resistor ; R6 : sixth resistor ; R7 : seventh resistor ; R8 : eighth resistor ; D1 : first discharge diode ; D2 : second discharge diode ; 3 : controller ; 4 : control part ; 5 : bridge rectifier circuit ; 6 : micro switch ; 7 : switch power supply ; R9 : ninth resistor ; 10 : external power source ; 20 : commercial power; 600 : jug lid.

Exemplary embodiments that are represented in the accompanying figures by way of example will now be described in detail. In the description below, when it relates to a figure, unless otherwise indicated, the same numbers in the different figures refer to the same or similar elements. The modes of realization described in the following exemplary embodiments do not represent all of the modes of realization in accordance with the invention. To the contrary, they are examples of devices and methods in accordance with some aspects of the invention as described in detail in the appended claims.

The terms used in the invention are merely configured to the purpose of describing specific embodiments, and not intended to limit the invention. The singular form "one", "said" and "the" used in the description and the claims also include the plural form, unless the context clearly shows another meaning. It should also be understood that the term "and/or" used herein means and includes any and all possible combinations of one or more associated listed items.

It should be understood that, while the invention may use terms such as "first," "second," and "third" to describe information, such information should not be limited to those terms. Those terms are merely used to distinguish between information of the same type. For example, without falling outside the scope of the invention, a first information can also be called a second information. Similarly, a second information can also be called a first information. Depending on the context, the word "if' as used herein can be interpreted to mean "when" or "in response to the determination."

Below, in reference to the accompanying figures, the control circuit and method for juicer automatic cleaning and the juicer of the invention are described in detail. In the absence of a conflict, the features of the following embodiments and the modes of realization can be combined with each other.

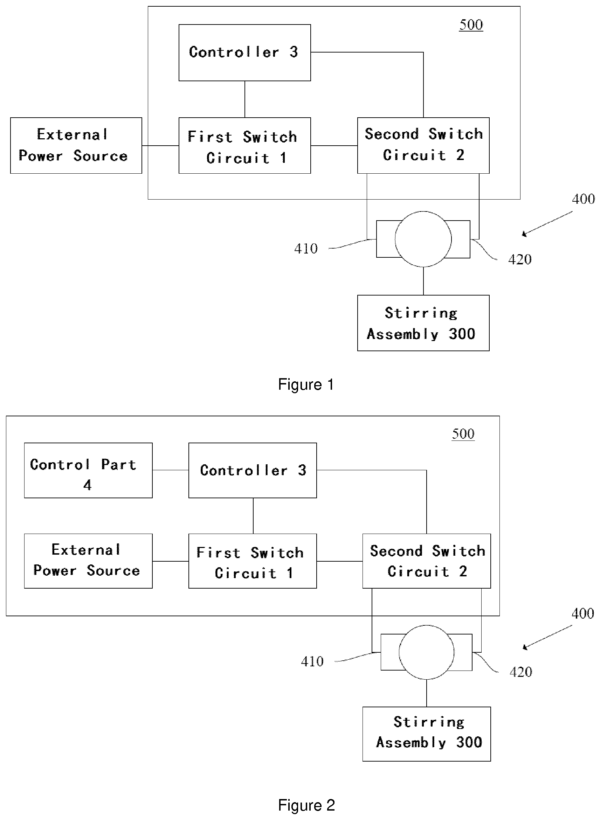

In reference to Figure 1, embodiments of the invention provide a control circuit for juicer automatic cleaning. The control circuit 500 can comprise a first switch circuit 1, a second switch circuit 2, and a controller 3. An input terminal of the first switch circuit 1 is connected with an external power source 10. For example, the external power source 10 is commercial power 20, and the input terminal of the first switch circuit 1 is connected with the neutral terminal of the external power source 10. An input terminal of the second switch circuit 2 is connected with an output terminal of the first switch circuit 1. An output terminal of the second switch circuit 2 is connected with an electric motor 400 that is connected in a driving manner with a stirring assembly 300 of a juicer. Further, an output terminal of the controller 3 is connected with a control terminal of the first switch circuit 1, and with a control terminal of the second switch circuit 2. The controller 3 can be a single chip microcomputer (SCM), FPGA, or other integrated chip. Taking the controller 3 as a SCM as an example for description, a first I/O port of the SCM is connected with the control terminal of the first switch circuit 1, a second I/O port of the SCM is connected with the control terminal of the second switch circuit 2, and the SCM provides control to switch on and off the first switch circuit 1 and the second switch circuit 2.

In the embodiment, the controller 3 is configured to, after having received an automatic cleaning trigger signal, control the first switch circuit 1 to be in an on state, so as to connect the external power source 10 to the electric motor 400 via the first switch circuit 1 and the second switch circuit 2, so that the electric motor 400 turns. Thus, after triggering by the automatic cleaning trigger signal, with the cooperation of the first switch circuit 1, the second switch circuit 2, and the controller 3, the electric motor 400 is driven automatically to turn, achieving automatic cleaning of the juicer, without the need for manual removal and cleaning by a user, facilitating the cleaning of the juicer.

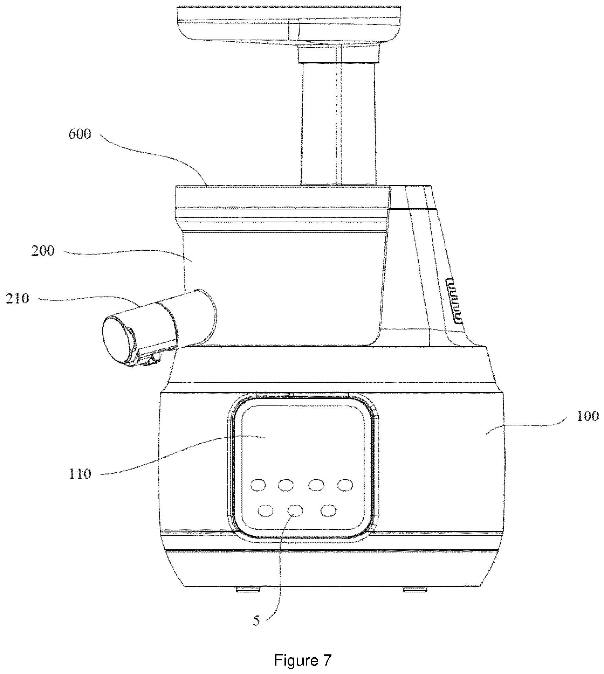

In a particular application scenario, in reference to Figure 7, before the automatic cleaning of the inner wall of a jug 200, a suitable amount of water needs to be added into the jug 200. The electric motor 400 turns and drives the stirring assembly 300 inside the jug 200 to turn, thus driving the water inside the jug 200 to turn and achieving the cleaning of the inner wall of the jug 200.

There can be multiple ways of generating the automatic cleaning trigger signal. For example, in an embodiment, in reference to Figures 2 and 7, the control circuit 500 can further comprise a control part 4 provided on a control panel 110 (as shown in Figure 7) of the juicer and electrically connected with the controller 3. The automatic cleaning trigger signal is generated when the control part 4 is triggered. The control part 4 can be a physical button, such as a push button or touch sensing button, or a virtual button. The type of the control part 4 is not specifically limited by the embodiment.

In another embodiment, the controller 3 directly generates the automatic cleaning trigger signal when it is determined that the current run of juicing has finished.

In the embodiment, the first switch circuit 1 is similar to a master switch. When the first switch circuit 1 is in an on state, the electric motor 400 is connected to the external power source 10 and powered to turn (forward, reverse, or forward + reverse), thus driving the stirring assembly 300 inside the jug to turn. When the first switch circuit 1 is in an off state, the electric motor 400 is disconnected from the external power source 10 and is stationary due to not being powered. The electric motor 400 of the embodiment is a DC motor, and the positive and negative voltages are used to control the forward and reverse rotation of the motor.

In some examples, the controller 3 is further configured to, after having received the automatic cleaning trigger signal, control the second switch circuit 2 to be in an on state, so as to control the electric motor 400 to turn forward. Optionally, when the second switch circuit 2 is in an on state, the positive pole of the external power source 10 is connected with a first terminal 410 of the electric motor 400, and the negative pole of the external power source 10 is connected with a second terminal 420 of the electric motor 400, so as to drive the electric motor 400 to turn forward.

In other examples, the controller 3 is further configured to, after having received the automatic cleaning trigger signal, control the second switch circuit 2 to be in an off state, so as to control the electric motor 400 to turn inversely. Optionally, when the second switch circuit 2 is in an off state, the positive pole of the external power source 10 is connected with the second terminal 420 of the electric motor 400, and the negative pole of the external power source 10 is connected with the first terminal 410 of the electric motor 400, so as to drive the electric motor 400 to turn inversely.

In the embodiment, to ensure cleaning performance, the controller 3 of the embodiment is further configured to, after having received the automatic cleaning trigger signal, control the second switch circuit 2 to switch between an on state and an off state, so as to control the electric motor 400 to switch between turning forward and turning inversely. Compared to the case where the electric motor 400 can only turn either forward or inversely in the previous embodiments, the present embodiment increases automatic cleaning performance by controlling the electric motor 400 to switch between turning forward and turning inversely. Specifically, when the second switch circuit 2 is in an on state, the positive pole of the external power source 10 is connected with the first terminal 410 of the electric motor 400, and the negative pole of the external power source 10 is connected with the second terminal 420 of the electric motor 400, so as to drive the electric motor 400 to turn forward. When the second switch circuit 2 is in an off state, the positive pole of the external power source 10 is connected with the second terminal 420 of the electric motor 400, and the negative pole of the external power source 10 is connected with the first terminal 410 of the electric motor 400, so as to drive the electric motor 400 to turn inversely.

In the embodiment, the second switch circuit 2 comprises a relay. When the relay is connected, the second switch circuit 2 is in an on state. When the relay is disconnected, the second switch circuit 2 is in an off state. At the instant when the relay is connected or disconnected, a huge inrush current will be generated, and will cause damage to the first switch circuit 1 and the electric motor 400 if the inrush current flows through them. To prevent the first switch circuit 1 and the electric motor 400 from being impacted by the inrush current generated at the instant when the relay is connected or disconnected, in this embodiment, the controller 3 must control the first switch circuit 1 to switch from an on state to an off state before controlling the second switch circuit 2 to switch from an on state to an off state or controlling the second switch circuit 2 to switch from an off state to an on state. Moreover, the controller also needs to block the first switch circuit 1 from switching from an off state to an on state after controlling the second switch circuit 2 to switch from an on state to an off state or controlling the second switch circuit 2 to switch from an off state to an on state, until ensuring that the relay is completely connected or disconnected, then the switching of the first switch circuit 1 is enabled so that the external power source 10 can be connected with the electric motor 400, thereby preventing the inrush current from affecting the first switch circuit 1 and the electric motor 400. Optionally, in some examples, the controller 3 is further configured to, after it is determined that the duration during which the electric motor 400 turns forward or inversely is longer than a pre-set duration (for example, 10s, or other experience-derived values, which is not limited by the embodiment), control the first switch circuit 1 to be in an off state, so as to disconnect the electric motor 400 from the external power source 10, preventing the inrush current from affecting the second switch circuit 2 and the electric motor 400. Further, before controlling the second switch circuit 2 to be in an on state or an off state, the controller 3 controls the first switch circuit 1 to be in an on state so that the external power source 10 is connected with the electric motor 400.

In the embodiment, the controller 3 controls the electric motor 400 to alternate between turning forward and turning inversely, wherein, the duration during which the controller 3 controls the electric motor 400 to turn forward can be equal to or different from the duration during which the controller 3 controls the electric motor 400 to turn inversely. In the embodiment, the duration during which the controller 3 controls the electric motor 400 to turn forward is equal to the duration during which the controller 3 controls the electric motor 400 to turn inversely.

Even further, the controller 3 counts the cycles of turning forward and counterwise of the electric motor 400. When the number of cycles of turning forward and inversely of the electric motor 400 exceeds a pre-set cycle, then current cleaning is terminated. Specifically, when the controller 3 determines that the number of times that the second switch circuit 2 has switched between an on state and an off state is larger than a pre-set number of times (for example, 3 times, or other experience-derived values, which is not limited by the embodiment), it controls the first switch circuit 1 to be in an off state.

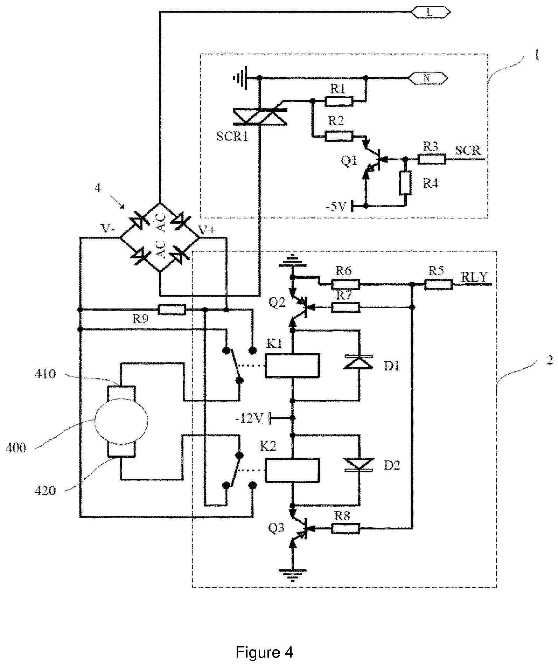

In the embodiment, in reference to Figure 4, the first switch circuit 1 can comprise a first triode Q1 and a thyristor (SCR) SCR1. The emitter of the first triode Q1 is connected with a first voltage source, the collector of the first triode Q1 is connected with the gate of the thyristor SCR1, and the base of the first triode Q1 (i.e., the SCR terminal in Figure 4) is a control terminal of the first switch circuit 1, and is connected with the first voltage source. A first main electrode of the thyristor SCR1 (i.e., the grounded terminal of the thyristor SCR1 in Figure 4) is connected with the negative pole of the external power source 10 and grounded, and the second main electrode of the thyristor SCR1 is an output terminal of the first switch circuit 1. In the embodiment, the first voltage source is 5V, and the emitter of the first triode Q1 is connected to a voltage of -5V. Optionally, when the SCR terminal is high level, the first triode Q1 is in an on state, the gate of the thyristor SCR1 is connected to -5V, there is a voltage difference of 5V between the gate and the first main electrode of the thyristor SCR1. Therefore, the first main electrode and the second main electrode of the thyristor SCR1 are turned on (connected), connecting to the neutral terminal of commercial power 20. When the SCR terminal is low level, the first triode Q1 is off, the thyristor SCR1 is off, and the neutral terminal of commercial power 20 cannot be connected with the downstream circuits. Optionally, the thyristor SCR1 can be a bidirectional thyristor SCR1.

Still in reference to Figure 4, the first switch circuit 1 further comprises a first resistor R1, a second resistor R2, a third resistor R3, and a forth resistor R4. One terminal of the first resistor R1 is connected with the neutral terminal of commercial power 20, and its other terminal is connected with the gate of the thyristor SCR1, so as to act as a current limiting resistor for the gate. In addition, the neutral terminal of commercial power 20 is grounded. One terminal of the second resistor R2 is connected with the gate of the thyristor SCR1, and its other terminal is connected with the collector of the first triode Q1, so as to act as a current limiting resistor for the collector. An output terminal of the controller 3 is connected with the base of the first triode Q1 via the third resistor R3. The third resistor R3 in the embodiment can act as a current limiting resistor for the base of the first triode 01, which is connected to the first voltage source via the fourth resistor R4.

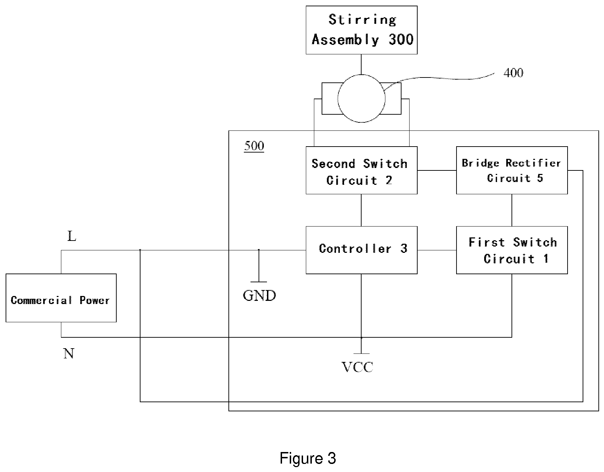

Further, in reference to Figure 3 and 4, the control circuit 500 can further comprise a bridge rectifier circuit 5, wherein, a first input terminal of the bridge rectifier circuit 5 is connected with the positive pole of the external power source 10, and a second input terminal is connected with the second main electrode of the thyristor SCR1, so as to perform rectification of the voltage input of the external power source 10. In the embodiment, when the second switch circuit 2 is in an off state, the positive pole of the bridge rectifier circuit 5 is connected with the first terminal 410 of the electric motor 400, and its negative pole is connected with the second terminal 420 of the electric motor. When the second switch circuit 2 is in an on state, the positive pole of the bridge rectifier circuit 5 is connected with the second terminal 420 of the electric motor 400, and its negative pole is connected with the first terminal 410 of the electric motor. In the embodiment, the bridge rectifier circuit 5 is a full bridge rectifier circuit.

Even further, the second switch circuit 2 can comprise a second triode Q2, a third triode Q3, a first relay K1, and a second relay K2. The base of the second triode Q2 and the base of the third triode Q3 (RLY in Figure 4) are both control terminals of the second switch circuit 2. The emitter of the second triode Q2 is grounded, its collector is connected with a first control terminal of the first relay K1, and a second control terminal of the first relay K1 is connected with a second voltage source. The emitter of the third triode Q3 is grounded, its collector is connected with a third control terminal of the second relay K2, and a fourth control terminal of the second relay K2 is connected with the second voltage source. The second voltage source in the embodiment is 12V, and both the second control terminal of the first relay K1 and the second control terminal of the second relay K2 are connected to a voltage of -12V. A fixed contact of the first relay K1 is connected with the first terminal 410 of the electric motor 400, and the two mobile contacts of the second relay K2 are respectively connected with the positive pole V+ and the negative pole V- of the bridge rectifier circuit 5. A fixed contact of the second relay K2 is connected with the first terminal 410 of the electric motor 400, and two mobile contacts of the second relay K2 are respectively connected with the positive pole V+ and the negative pole V- of the bridge rectifier circuit 5.

In a particular embodiment, when RLY is low level, the second triode Q2 and the third triode Q3 are both off, the first relay K1 and the second relay K2 are disconnected (the on state as shown in Figure 4), V+ is connected to the second terminal 420, V- is connected to the first terminal 410, and the electric motor 400 turns inversely. When the RLY is high level, the second triode Q2 and the third triode Q3 are both on, the first relay K1 and the second relay K2 are connected (opposite to the on state as shown in Figure 4), V+ is connected to the first terminal 410, V- is connected to the second terminal 420, and the electric motor 400 turns forward.

Still in reference to Figure 4, the second switch circuit 2 in the embodiment can further comprise a fifth resistor R5, an output terminal of the controller 3 is connected with the base of the second triode Q2 via the fifth resistor R5, and connected with the base of the third triode Q3 via the fifth resistor R5, so as to limit the current flowing into the base of the second triode Q2 and the current flowing into the base of the third triode Q3. Further, the second switch circuit 2 can further comprise a sixth resistor R6 and a seventh resistor R7, wherein, one terminal of the sixth resistor R6 is grounded and its other terminal is connected with the terminal of the fifth resistor R5 that is connected with the base of the second triode Q2. The seven resistor R7 is connected in series between the fifth resistor R5 and the base of the second triode Q3. In addition, the second switch circuit 2 further comprises an eighth resistor R8 that is connected in series between the fifth resistor R5 and the base of the third triode Q3.

In the embodiment, the first relay K1 is connected in parallel with a first discharge diode D1. When the first relay K1 is disconnected, discharging of the first relay K1 coils is realized via the first discharge diode D1. The second relay K2 is connected in parallel with a second discharge diode D2. When the second relay K2 is disconnected, discharging of the second relay K2 coils is realized via the second discharge diode D2.

Further in reference to Figure 4, the control circuit 500 further comprises a ninth resistor R9, wherein, one terminal of the ninth resistor R9 is connected with V+, and its other terminal is connected with V-.

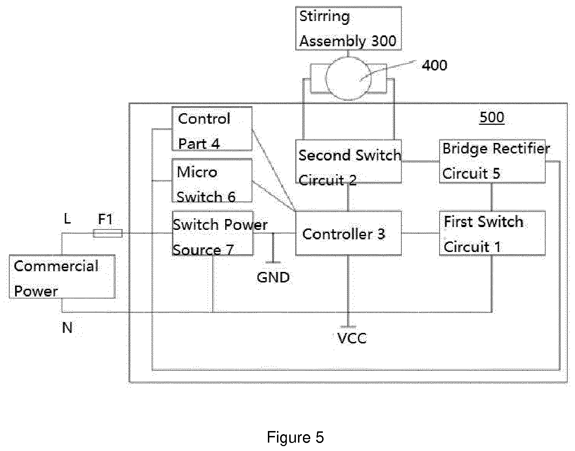

In reference to Figure 5, the control circuit 500 of the embodiment can further comprise a micro switch 6 configured to detecting whether the jug lid 600 of a juicer is closed or not. Specifically, the micro switch 6 is electrically connected with the controller 3. When the jug lid 600 is closed, the micro switch 6 is in an on state, and the controller 3 will receive a signal that the micro switch 6 is in an on state. In the embodiment, the controller 3, after having received the automatic cleaning trigger signal and determined that the micro switch 6 is in an on state, controls the first switch circuit 1 to be in an on state. Automatic cleaning cannot be executed until the jug lid 600 is closed on the jug 200, thus preventing injuries to a user and increasing utilization safety.

In some particular embodiments, the micro switch 6 is provided at the side of the jug 200 closed to the jug lid 600. The jug lid 600 is provided with a trigger mechanism. When the jug lid 600 is closed on the jug 200, the micro switch 6 is triggered by the trigger mechanism to be in an on state. When the jug lid 600 separates from the jug 200, the micro switch 6 is in an off state.

Still in reference to Figure 5, the control circuit 500 of the embodiment can further comprise a switch power supply 7. Commercial power 20, after undergoing voltage conversion by the switch power supply 7, supplies power to the controller 3. The switch power supply 7 can be chosen to be a non-isolated switch power supply. In addition, the live terminal of commercial power 20 of the embodiment is connected with the switch power supply 7 via a fuser-resistor F, further increasing the safety of the control circuit 500.

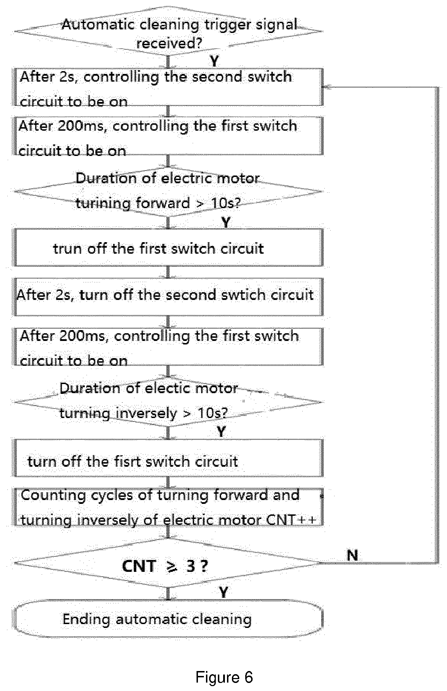

In reference to Figure 6, in some particular application scenarios, the controller 3 controls the second switch circuit 2 to be in an on state in 2 seconds (an experience-derived value, which can be set according to needs) after receiving the automatic cleaning trigger signal, and after controlling the second switch circuit 2 to be in an on state for 200ms (an experience-derived value, which can be set according to needs, so as to ensure that the relay in the second switch circuit 2 is completed connected), the controller 3 controls the first switch circuit 1 to be in an on state, and the electric motor 400 turns forward. When the electric motor 400 has been turning forward for longer than 10s (an experience-derived value, which can be set according to needs), the controller 3 turns off the first switch circuit 1. Then, the controller 3, after 2s (an experience-derived value, which can be set according to needs, so as to ensure that the electric motor has stopped turning forward and the reverse electromotive force has been fully discharged) after turning off the first switch circuit 1, disconnects the second switch circuit 2, and after the second switch circuit 2 is disconnected for 200ms

(an experience-derived value, which can be set according to needs, so as to ensure that the relay in the second switch circuit 2 is completely disconnected), controls the first switch circuit 1 to be on, and the electric motor 400 turns inversely. When the electric motor 400 has been turning inversely for longer than 10s (an experience-derived value, which can be set according to needs), the first switch circuit 1 is turned off. So far, the electric motor 400 has completed one cycle of turning forward and inversely. The controller 3 counts the number of cycles CNT of turning forward and inversely of the electric motor 400. When CNT is larger than or equal to 3, automatic cleaning is terminated and the controller 3 turns off the first switch circuit 1.

The controller 3 of the embodiment turns on the first switch circuit 1 by way of soft start, thus reducing starting current.

In reference to Figure 7, embodiments of the invention further provide a juicer. The juicer can comprise a main unit 100, a jug 200, a stirring assembly 300, an electric motor 400, and a control circuit 500 for juicer automatic cleaning of any of the above embodiments. The main unit 100 is configured to receive the jug 200. The stirring assembly 300 is at least partially housed inside the jug 200. The stirring assembly 300 of the embodiment can be a stirring blade assembly, or a pressing screw. The type of the stirring assembly 300 is not specifically limited by the embodiment. Further, the electric motor 400 is provided on the main unit 100 and for driving the stirring assembly 300. The control circuit 500 is provided on the main unit 100 and electrically connected with the electric motor 400.

The main unit 100 of the embodiment comprises a control panel 110 on which various manipulation buttons such as a start button, an automatic cleaning button, a juicing type selection button, etc. are provided. Further, the control panel 110 can be used to display current operational parameters of the juicer, such as the temperature of the liquid inside the jug 200, the rotation speed of the electric motor 400, etc.

The outer side wall of the jug 200 is provided with a juice output part 210 that is connected with the inside of the jug 200. After cleaning is finished, cleaning liquid in the jug 200 is discharged through the juice output part 210.

Further, the juicer further comprises a jug lid 600 that cooperates with the jug 200.

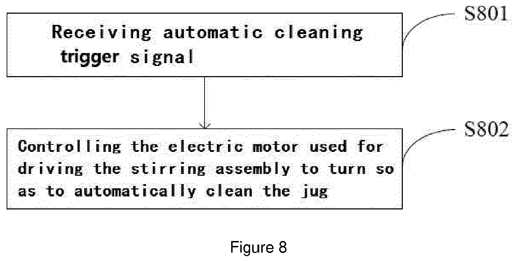

In reference to Figure 8, embodiments of the invention further provide a control method for juicer automatic cleaning. The method can comprise the following steps:
Step S801 receiving an automatic cleaning trigger signal;
Step S802: controlling the electric motor 400 to turn, so as to proceed automatic cleaning of the jug 200, wherein, the electric motor 400 is configured to drive the stirring assembly 300.

The executing entity of the embodiment is the controller 3, which can be a central controller of the main unit 100.

The juicer of embodiments of the invention automatically drives the electric motor to turn after being triggered by an automatic cleaning trigger signal, achieving automatic cleaning of the juicer, without the need for manual removal and cleaning by a user, facilitating cleaning of the juicer.

In an embodiment, the controller 3 controls the electric motor 400 to turn forward. In another embodiment, the controller 3 controls the electric motor 400 to turn inversely. In yet another embodiment, the controller 3 controls the electric motor 400 to switch between turning forward and turning inversely, so as to increase cleaning performance of the jug 200.

Further, in reference to Figure 1, the juicer of the embodiment can comprise a firs switch circuit 1 and a second switch circuit 2, wherein, one can refer to the description of embodiments of the control circuit 500 regarding the connection relationship between the first switch circuit 1, the second switch circuit 2, the controller 3, and the electric motor 400, which will not be described again here. The steps of the controller 3 controlling the electric motor 400 to switch between turning forward and turning inversely comprises: controlling the first switch circuit 1 to be in an on state, so that the external power source 10 is connected with the electric motor 400 via the first switch circuit 1 and the second switch circuit 2; controlling the second switch circuit 2 to switch between an on state and an off state, so that the electric motor 400 switches between turning forward and turning inversely.

In an embodiment, the controller 3, after controlling the first switch circuit 1 to be in an on state, controls the second switch circuit 2 to switch between an on state and an off state, i.e., the step of controlling the second switch circuit 2 to switch between an on state and an off state is executed while the first switch circuit 1 is in an on state.

In another embodiment, the steps of the controller 3 controlling the electric motor 400 to switch from turning forward to turning inversely comprises, sequentially: controlling the first switch circuit 1 to be in an off state, so that the electric motor 400 is disconnected from the external power source 10; controlling the second switch circuit 2 to be in an off state; controlling the first switch circuit 1 to be in an on state.

Optionally, the step of the controller 3 controlling the first switch circuit 1 to be in an on state is performed after the controller 3 controlling the second switch circuit 2 to be in an off state for a first preset time duration. The first preset time duration can be set according to needs, for example, it can be 200ms.

Optionally, the step of the controller 3 controlling the second switch circuit 2 to be in an off state is performed after the step of the controller 3 controlling the first switch circuit 1 to be in an off state for a second preset time duration. The second preset duration can be set according to needs, for example, it can be 2s.

Further, the steps of the controller 3 controlling the electric motor 400 to switch from turning inversely to turning forward comprises, sequentially: controlling the first switch circuit 1 to be in an off state, so that the electric motor 400 is disconnected from the external power source 10; controlling the second switch circuit 2 to be in an on state; controlling the first switch circuit 1 to be in an on state.

Optionally, the step of the controller 3 controlling the first switch circuit 1 to be in an on state is executed after a third preset time duration after the step of the controller 3 controlling the second switch circuit 2 to be in an on state. The third preset time duration can be set according to needs, for example, it can be 200ms.

Optionally, the step of the controller 3 controlling the second switch circuit 2 to be in an on state is executed after a fourth preset time duration after the step of the controller 3 controlling the first switch circuit 1 to be in an off state. The fourth preset time duration can be set according to needs, for example, it can be 2s.

Even further, the steps of the controller 3 controlling the electric motor 400 to switch between turning forward and turning inversely comprises: upon determining that the time duration during which the electric motor 400 turns forward is longer than a fifth preset time duration, controlling the second switch circuit 2 to switch from an on state to an off state; upon determining that the time duration during which the electric motor 400 turns inversely is longer than a sixth preset time duration, controlling the second switch circuit 2 to switch from an off state to an on state. The fifth preset duration and the sixth preset duration can be set according to needs, and can be the same (e.g., both 10s) or different.

In an embodiment, after the controller 3 controls the electric motor 400 to switch between turning forward and turning inversely, the control method further comprises: when it is determined that the number of times that the second switch circuit 2 has switched between an on state and an off state is larger than a preset number of times, controlling the first switch circuit 1 to be in an off state.

In an embodiment, before the controller 3 controls the electric motor 400 to turn, the control method further comprises: detecting whether the jug lid 600 of the juicer is closed based on the micro switch 6; determining that the jug lid 600 is closed.

For further explanation of the control method for juicer automatic cleaning, one can refer to embodiments of the control circuit 500. It will not be described again here.

In the description of the invention, "up," "down," "front," "back," "left," and "right" should be understood as the directions of "up," "down," "front," "back," "left," and "right" of a juicer formed by the jug 200 and the main unit 100 from top to bottom.

What has been described is merely preferred embodiments of the invention, and not used to limit the invention. Any modification, equivalent replacement, or improvement made within the spirit and principle of the invention shall fall within the scope of protection of the invention.

## Claims

1. A control circuit for juicer automatic cleaning, **characterized in that**, it comprises:
A first switch circuit (1), of which an input terminal is connected with an external power source (10);
A second switch circuit (2), of which an input terminal is connected with an output terminal of the first switch circuit (1), and an output terminal of the second switch circuit (2) is connected with an electric motor (400), the electric motor (400) being connected in a driving manner with a stirring assembly (300) of the juicer; and
A controller (3), of which an output terminal is connected with a control terminal of the first switch circuit (1) and a control terminal of a second switch circuit (2);
Wherein, the controller (3) is configured to, after having received an automatic cleaning trigger signal, control the first switch circuit (1) to be in an on state so as to connect an external power source (10) to the electric motor (400) via the first switch circuit (1) and the second switch circuit (2), such that the electric motor (400) turns.

2. The control circuit according to claim 1, **characterized in that**, the controller (3) is further configured to, after having received the automatic cleaning trigger signal, control the second switch circuit (2) to switch between an on state and an off state, so as to control the electric motor (400) to switch between turning forward and turning inversely;
Wherein, when the second switch circuit (2) is in an on state, the positive pole of the external power source (10) is connected with a first terminal (410) of the electric motor (400), and the negative pole of the external power source (10) is connected with a second terminal (420) of the electric motor (400), so as to drive the electric motor (400) to turn forward; when the second switch circuit (2) is in an off state, the positive pole of the external power source (10) is connected with the second terminal (420) of the electric motor (400), and the negative pole is connected with the first terminal (410) of the electric motor (400), so as to drive the electric motor (400) to turn inversely.

3. The control circuit according to claim 2, **characterized in that**, the controller (3) is further configured to, when it is determined that the time duration during which the electric motor (400) turns forward or inversely is longer than a preset time duration, control the first switch circuit (1) to be in an off state, so as to disconnect the electric motor (400) from the external power source (10); and, before controlling the second switch circuit (2) to be in an on state or controlling the second switch circuit (2) to be in an off state, control the first switch circuit (1) to be in an on state.

4. The control circuit according to claim 2, **characterized in that**, the controller (3), when it is determined that the number of times the second switch circuit (2) switches between an on state and an off state is larger than a preset number of times, controls the first switch circuit (1) to be in an off state.

5. The control circuit according to claim 1, **characterized in that**, the control circuit further comprises:
A control part (4) provided on a control panel (110) of the juicer and electrically connected with the controller (3);
Wherein, the automatic cleaning trigger signal is generated by the control part (4) when the control part (4) is triggered.

6. The control circuit according to claim 1, **characterized in that**, the first switch circuit (1) comprises a first triode (Q1) and a thyristor (SCR1);
Wherein, the emitter of the first triode (Q1) is connected with a first voltage source, the collector of the first triode is connected with the gate of the thyristor (SCR1), and the base of the first triode (Q1) is the control terminal of the first switch circuit (1) and is connected with the first voltage source;
Wherein, a first main electrode of the thyristor (SCR1) is connected with the negative pole of the external power source (10) and is grounded, and a second main electrode of the thyristor (SCR1) is the output terminal of the first switch circuit (1).

7. The control circuit according to claim 6, **characterized in that**, the control circuit further comprises:
A bridge rectifier circuit (5), a first input terminal of the bridge rectifier circuit (5) being connected with the positive pole of the external power source (10), and a second input terminal being connected with the second main electrode of the thyristor (SCR1);
Wherein, when the second switch circuit (2) is in an off state, the positive pole of the bridge rectifier circuit (5) is connected with a first terminal (410) of the electric motor (400), and the negative pole is connected with a second terminal (420) of the electric motor (400);
Wherein, when the second switch circuit (2) is in an on state, the positive pole of the bridge rectifier circuit (5) is connected with the second terminal (420) of the electric motor (400), and the negative pole is connected with the first terminal (410) of the electric motor (400).

8. The control circuit according to claim 7, **characterized in that**, the second switch circuit (2) comprises a second triode (Q2), a third triode (Q3), a first relay (K1), and a second relay (K2);
Wherein, the base of the second triode (Q2) and the base of the third triode (Q3) are both control terminals of the second switch circuit (2);
Wherein, the emitter of the second triode (Q2) is grounded, the collector is connected with a first control terminal of the first relay (K1), and a second control terminal of the first relay (K1) is connected with a second voltage source;
Wherein, the emitter of the third triode (Q3) is grounded, the collector is connected with a third control terminal of the second relay (K2), and a fourth control terminal of the second relay (K2) is connected with a second voltage source;
Wherein, a fixed contact of the first relay (K1) is connected with the first terminal (410) of the electric motor (400), and two mobile contacts of the second relay (K2) are connected respectively with the positive pole and negative pole of the bridge rectifier circuit (5);
Wherein, a fixed contact of the second relay (K2) is connected with the first terminal (410) of the electric motor (400), and two mobile contacts of the second relay (K2) are connected respectively with the positive pole and negative pole of the bridge rectifier circuit (5).

9. The control circuit according to claim 1, **characterized in that**, the control circuit further comprises:
A micro switch (6) configured to detect whether a jug lid (600) of the juicer is closed or not, the micro switch (6) being electrically connected with the controller (3);
Wherein, when the jug lid (600) is closed, the micro switch (6) is in an on state;
Wherein, the controller (3), after having received an automatic cleaning trigger signal and determined that the micro switch (6) is in an on state, controls the first switch circuit (1) to be in an on state.

10. A juicer, **characterized in that**, it comprises:
A main unit (100);
A jug (200) placed on the main unit (100);
A stirring assembly (300), being at least partially received inside the jug (200);
An electric motor (400), provided on the main unit (110) and configured to drive the stirring assembly (300); and
A control circuit (500) for juicer automatic cleaning according to any one of claims 1 to 9, the control circuit (500) being provided on the main unit and electrically connected with the electric motor (400).

11. A control method for juicer automatic cleaning, **characterized in that**, the method comprises:
Receiving an automatic cleaning trigger signal;
Controlling an electric motor (400) to turn, so as to automatically clean a jug (200), wherein, the electric motor (400) is configured to drive a stirring assembly (300).

12. The method according to claim 11, **characterized in that**, the controlling an electric motor (400) to turn comprises:
Controlling the electric motor (400) to switch between turning forward and turning inversely.

13. The method according to claim 12, **characterized in that**, the juicer comprises a first switch circuit (1) and a second switch circuit (2);
Wherein, the controlling the electric motor (400) to switch between turning forward and turning inversely comprises:
- Controlling the first switch circuit (1) to be in an on state, so as to connect the external power source (10) to the electric motor (400) via the first switch circuit (1) and the second switch circuit (2);
- Controlling the second switch circuit (2) to switch between an on state and an off state, so as to switch the electric motor (400) between turning forward and turning inversely.

14. The method according to claim 13, **characterized in that**, a step of controlling the electric motor (400) to switch from turning forward to turning inversely comprises, sequentially:
Controlling the first switch circuit (1) to be in an off state, so as to disconnect the electric motor (400) from the external power source (10);
Controlling the second switch circuit (2) to be in an off state;
Controlling the first switch circuit (1) to be in an on state.

15. The method according to claim 13, **characterized in that**, a step of controlling the electric motor (400) to switch from turning inversely to turning forward comprises, sequentially:
Controlling the first switch circuit (1) to be in an off state, so as to disconnect the electric motor (400) from the external power source (10);
Controlling the second switch circuit (2) to be in an on state;
Controlling the first switch circuit (1) to be in an on state.

16. The method according to claim 13, **characterized in that**, the controlling the electric motor (400) to switch between turning forward and turning inversely comprises:
When it is determined that the time duration during which the electric motor (400) turns forward is longer than a fifth preset time duration, controlling the second switch circuit (2) to switch from an on state to an off state;
When it is determined that the time duration during which the electric motor (400) turns inversely is longer than a sixth preset time duration, controlling the second switch circuit (2) to switch from an off state to an on state.

17. The method according to claim 13, **characterized in that**, after the controlling the electric motor (400) to switch between turning forward and turning inversely, the control method further comprises:
When it is determined that the number of times the second switch circuit (2) switches between an on state and an off state is larger than a preset number of times, controlling the first switch circuit (1) to be in an off state.

18. The method according to claim 11, **characterized in that**, before the controlling the electric motor (400) to turn, the control method further comprises:
Detecting whether a jug lid (600) of the juicer is closed by means of a micro switch (6);
Determining that the jug lid (600) is closed.
